# EUROPÄISCHE PATENTANMELDUNG

(11) **EP 2 902 688 A1**
(43) Veröffentlichungstag der Anmeldung: **05.08.2015**
(21) Anmeldenummer: 15151605.1
(22) Anmeldetag: 19.01.2015
(51) Int. Cl.: F16L 37/088, F02M 35/10

(54) **Stutzen für ein Schnellkupplungssystem**

(30) Priorität: 31.01.2014 DE 102014101212
(71) Anmelder: VERITAS AG, 63571 Gelnhausen (DE)
(72) Erfinder: Scheicher, Steffen, 63599 Biebergemünd (DE); Kari, Artur, 63762 Großostheim (DE)
(74) Vertreter: Klinski, Robert

(57) **Zusammenfassung**

Die vorliegende Erfindung betrifft einen Stutzen (100) für ein Schnellkupplungssystem mit einem Gegenstutzen. Der Stutzen (100) umfasst einen Einsatzabschnitt (101) zum Einsetzen des Gegenstutzens und einen Verriegelungsbügel (103) mit einem ersten federnden Bügelabschnitt (103-1) zum Verriegeln des Gegenstutzens innerhalb des Einsatzabschnittes (101) an einer ersten Seite; einem zweiten federnden Bügelabschnitt (103-2) zum Verriegeln des Gegenstutzens innerhalb des Einsatzabschnittes (101) an einer zweiten Seite; und einem dritten Bügelabschnitt (103-3) zum Spreizen des ersten und des zweiten federnden Bügelabschnitts (103-1, 103-2) durch Drücken des Verriegelungsbügels (103) in Richtung des Einsatzabschnittes (101), um den Gegenstutzen zu entriegeln.

## Beschreibung

Die vorliegende Erfindung betrifft einen Stutzen für ein Schnellkupplungssystem mit einem Gegenstutzen, der einen Einsatzabschnitt zum Einsetzen des Gegenstutzens und einen Verriegelungsbügel umfasst.

Es ist die der Erfindung zugrundeliegende Aufgabe, einen Stutzen für ein Schnellkupplungssystem anzugeben, das auf einfache Art und Weise verriegelt und entriegelt werden kann.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch einen Stutzen für ein Schnellkupplungssystem mit einem Gegenstutzen gelöst, der einen Einsatzabschnitt zum Einsetzen des Gegenstutzens und einen Verriegelungsbügel umfasst, mit einem ersten federnden Bügelabschnitt zum Verriegeln des Gegenstutzens innerhalb des Einsatzabschnittes an einer ersten Seite; einem zweiten federnden Bügelabschnitt zum Verriegeln des Gegenstutzens innerhalb des Einsatzabschnittes an einer zweiten Seite; und einem dritten Bügelabschnitt zum Spreizen des ersten und des zweiten federnden Bügelabschnitts durch Drücken des Verriegelungsbügels in Richtung des Einsatzabschnittes, um den Gegenstutzen zu entriegeln. Dadurch wird beispielsweise der technische Vorteil erreicht, dass der Gegenstutzen bei einem Einschieben in den Einsatzabschnitt automatisch verriegelt wird und in schneller Weise durch Drücken des Verriegelungsbügels gelöst werden kann. Da der Verriegelungsbügel zur Demontage des Schnellkupplungssystems nicht demontiert oder gezogen wird und sich stets im verriegelungsfähigen Zustand befindet, werden Fehlbedienungen ausgeschlossen.

In einer vorteilhaften Ausführungsform des Stutzens ist der Verriegelungsbügel u-förmig oder v-förmig. Dadurch wird beispielsweise der technische Vorteil erreicht, dass eine einfache Grundform des Verriegelungsbügels erhalten wird, durch die sich der Verriegelungsbügel beim Drücken in Richtung des Einsatzabschnittes automatisch spreizt.

In einer weiteren vorteilhaften Ausführungsform des Stutzens ist der Verriegelungsbügel aus einem gebogenen Draht mit rundem, ovalem oder rechteckigen Querschnitt gebildet.

Dadurch wird beispielsweise der technische Vorteil erreicht, dass der Verriegelungsbügel auf einfache Weise hergestellt werden kann.

In einer weiteren vorteilhaften Ausführungsform des Stutzens umfasst der Einsatzabschnitt eine erste gestreckte Öffnung zum seitlichen Führen des ersten federnden Bügelabschnitt bei dem Spreizen und eine zweite gestreckte Öffnung zum seitlichen Führen des zweiten federnden Bügelabschnitt beim Spreizen. Dadurch wird beispielsweise der technische Vorteil erreicht, dass sich der Verriegelungsbügel in den gestreckten Öffnungen seitlich spreizen kann und in Längsrichtung durch die gestreckten Öffnungen in Position gehalten wird.

In einer weiteren vorteilhaften Ausführungsform des Stutzens ist die erste gestreckte Öffnung in einem ersten Erweiterungsabschnitt zum radialen Erweitern des Einsatzabschnittes angeordnet und die zweite gestreckte Öffnung in einem zweiten Erweiterungsabschnitt zum radialen Erweitern des Einsatzabschnittes angeordnet. Dadurch wird beispielsweise der technische Vorteil erreicht, dass eine seitliche Spreizung des Verriegelungsbügels in den gestreckten Öffnungen erleichtert wird.

In einer weiteren vorteilhaften Ausführungsform des Stutzens sind der erste und der zweite Erweiterungsabschnitt im Querschnitt bogenförmig. Dadurch wird beispielsweise der technische Vorteil erreicht, dass die Festigkeit des Einsatzabschnittes aufrechterhalten wird.

In einer weiteren vorteilhaften Ausführungsform des Stutzens sind die Endabschnitte des ersten und des zweiten federnden Bügelabschnittes abgewinkelt, um ein Herausrutschen des Verriegelungsbügels aus dem Einsatzabschnittes zu verhindern. Dadurch wird beispielsweise der technische Vorteil erreicht, dass der Verriegelungsbügel an dem Einsatzabschnitt gehalten wird.

In einer weiteren vorteilhaften Ausführungsform des Stutzens verlaufen der erste und der zweite Bügelabschnitt kreissehnenförmig innerhalb des Einsatzabschnittes. Dadurch wird beispielsweise der technische Vorteil erreicht, dass eine feste Verriegelung des Gegenstutzens erreicht wird.

In einer weiteren vorteilhaften Ausführungsform des Stutzens sind der erste und der zweite Bügelabschnitt parallel zueinander angeordnet. Dadurch wird beispielsweise der technische Vorteil erreicht, dass der Gegenstutzen auf gegenüberliegenden Seiten mit einer symmetrischen Kraft gehalten wird.

In einer weiteren vorteilhaften Ausführungsform des Stutzens umfasst der Stutzen eine umlaufende Auflagefläche für ein Ende des Gegenstutzens. Dadurch wird beispielsweise der technische Vorteil erreicht, dass der Gegenstutzen beim Einschieben in den Einsatzabschnitt einen Anschlag findet.

In einer weiteren vorteilhaften Ausführungsform des Stutzens umfasst die umlaufende Auflagefläche einen Dichtring. Dadurch wird beispielsweise der technische Vorteil erreicht, dass eine fluiddichte Verbindung zwischen Stutzen und Gegenstutzen erreicht wird.

In einer weiteren vorteilhaften Ausführungsform des Stutzens umfasst der Einsatzabschnitt eine Aussparung in Einsatzrichtung zum Aufnehmen eines Vorsprungs des Gegenstutzens. Dadurch wird beispielsweise der technische Vorteil erreicht, dass der Gegenstutzen nur in einer vorgesehenen Lage eingesetzt werden kann.

In einer weiteren vorteilhaften Ausführungsform des Stutzens ist die Aussparung im Querschnitt rechteckig. Dadurch wird beispielsweise der technische Vorteil erreicht, dass ein Verdrehen des Gegenstutzens in dem Einsatzabschnitt verhindert wird.

In einer weiteren vorteilhaften Ausführungsform des Stutzens ist ein Körper des Stutzens durch ein Kunststoffformteil gebildet. Dadurch wird beispielsweise der technische Vorteil erreicht, dass der Stutzen auf einfache Weise in der gewünschten Form hergestellt werden kann.

Gemäß einem ersten Aspekt der Erfindung wird die Aufgabe durch ein Schnellkupplungssystem mit einem Stutzen nach dem ersten Aspekt und einem Gegenstutzen mit einer umlaufenden Nut zum Eingreifen des ersten federnden Bügelabschnittes und des zweiten federnden Bügelabschnittes gelöst. Dadurch wird beispielsweise ebenfalls der technische Vorteil erreicht, dass der Gegenstutzen bei einem Einschieben in den Einsatzabschnitt automatisch verriegelt wird und in schneller Weise durch Drücken des Verriegelungsbügels gelöst werden kann.

Ausführungsbeispiele der Erfindung sind in den Zeichnungen dargestellt und werden im Folgenden näher beschrieben.

Es zeigen:
- Fig. 1: eine perspektivische Ansicht eines Stutzens für ein Schnellkupplungssystem in Verriegelungsposition;
- Fig. 2: eine Aufsicht des Stutzens für das Schnellkupplungssystem in Verriegelungsposition;
- Fig. 3: eine perspektivische Ansicht des Stutzens für das Schnellkupplungssystem in Entriegelungsposition; und
- Fig. 4: eine Aufsicht des Stutzens für das Schnellkupplungssystem in Entriegelungsposition.

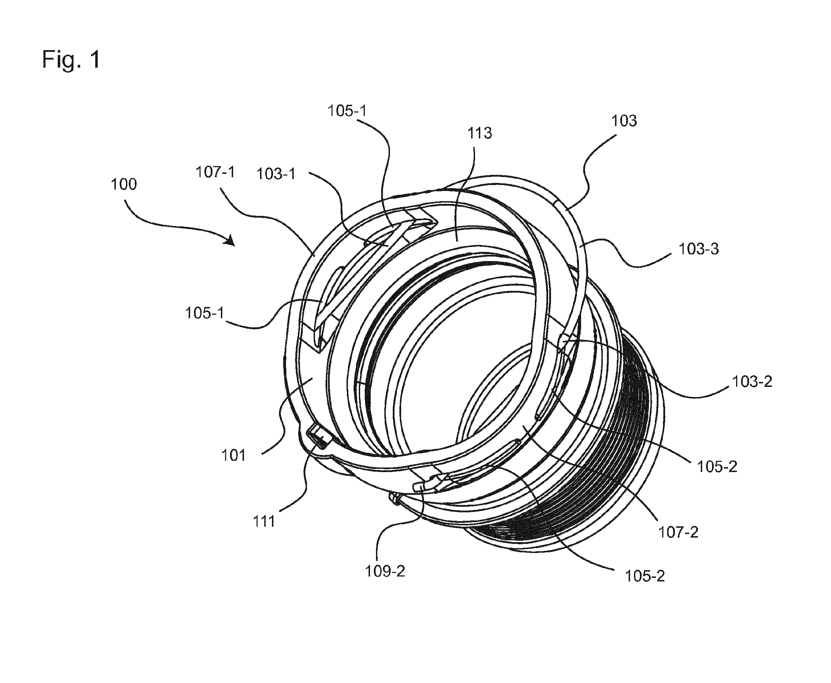

Fig. 1 zeigt eine perspektivische Ansicht eines Stutzens 100 für ein Schnellkupplungssystem mit einem Gegenstutzen in Verriegelungsposition. Der Stutzen 100 kann beispielsweise für eine Ladeluftverbindung in einem Kraftfahrzeug verwendet werden. Der Stutzen 100 umfasst einen Einsatzabschnitt 101 zum Einsetzen des Gegenstutzens und einen Verriegelungsbügel 103 zum Verriegeln des eingesetzten Gegenstutzens. Der eingesetzte Gegenstutzen befindet sich in Kontakt mit einer umlaufenden Auflagefläche 113 im Inneren des Einsatzabschnittes 101 und liegt auf dieser auf. Durch die umlaufenden Auflagefläche 113 wird ein Einschub des Gegenstutzens in den Einsatzabschnitt 101 begrenzt. Der Gegenstutzen befindet sich dadurch nach dem Einschieben an einer exakt vorgesehenen Position.

Der Verriegelungsbügel 103 umfasst einen ersten federnden Bügelabschnitt 103-1 zum Verriegeln des Gegenstutzens an einer ersten Seite und einen zweiten federnden Bügelabschnitt 103-2 zum Verriegeln des Gegenstutzen an einer zweiten Seite. Beim Einsetzen des Gegenstutzens in den Einsatzabschnitt 101 werden die beiden Bügelabschnitte 103-1 und 103-2 zunächst nach Außen gedrückt und rasten dann federnd in einer umlaufenden Nut des Gegenstutzens ein. Die Nut befindet sich in der gleichen Tiefe des Einsatzabschnittes 101 wie die federnden Bügelabschnitte 103-1 und 103-2. Durch das Einfedern der Bügelabschnitte 103-1 und 103-2 wird der Gegenstutzen an dem Stutzen 100 arretiert.

Der einstückige Verriegelungsbügel 103 ist u-förmig ausgebildet. Die beiden geraden Bügelabschnitte 103-1 und 103 sind mit einem gebogenen Bügelabschnitt 103-3 des Verriegelungsbügels 103 verbunden. Der Verriegelungsbügel 103 ist beispielsweise aus einem gebogenen Runddraht gebildet. Der Verriegelungsbügel 103 ist in Richtung des Stutzens 100 verschiebbar gelagert. Der Verriegelungsbügel 103 ist in zwei gestreckten Öffnungen 105-1 an einer Seite des Stutzens 100 und zwei gestreckten Öffnungen 105-2 an der anderen Seite des Stutzens 100 geführt. Die gestreckten Öffnungen 105-1 und 105-2 sind derart gestaltet, dass diese eine seitliche Spreizung der Bügelabschnitte 103-1 und 103-2 zulassen. In der Verriegelungsposition liegen der erste und der zweite Bügelabschnitt 103-1, 103-2 parallel zueinander und greifen in die Nut des Gegenstutzens ein.

Der zylindrische Einsatzabschnitt 101 für den Gegenstutzen ist an zwei gegenüberliegenden Seiten durch einen ersten Erweiterungsabschnitt 107-1 und einen zweiten Erweiterungsabschnitt 107-2 radial verbreitert. Die Erweiterungsabschnitte 107-1 und 107-2 verbreitern die Kreisform des zylindrischen Einsatzabschnittes 101 in bogenförmiger Weise und ermöglichen eine seitliche Spreizung des Verriegelungsbügels 103.

Die gestreckten Öffnungen 105-1 und 105-2 sind in den Erweiterungsabschnitten 107-1 und 107-2 angeordnet. Der erste und der zweite Bügelabschnitt 103-1 und 103-2 durchlaufen die Erweiterungsabschnitte 107-1 und 107-2 sehnenartig. Die Endabschnitte 109-1, 109-2 des ersten und des zweiten federnden Bügelabschnittes 103-1, 103-2 sind abgewinkelt oder abgebogen, um ein unbeabsichtigtes Herausrutschen des Verriegelungsbügels 103 aus den gestreckten Öffnungen 105-1 und 105-2 des Einsatzabschnittes 101 zu verhindern.

Der Einsatzabschnitt 101 umfasst eine Aussparung 111 in Einsatzrichtung des Gegenstutzens zum Aufnehmen eines komplementären Vorsprungs des Gegenstutzens. Durch wird erreicht, dass der Gegenstutzen nur in einer vorgesehenen Orientierung in den Einsatzabschnitt 101 eingesetzt werden kann. Die Aussparung 111 weist im Querschnitt eine rechteckige Form auf.

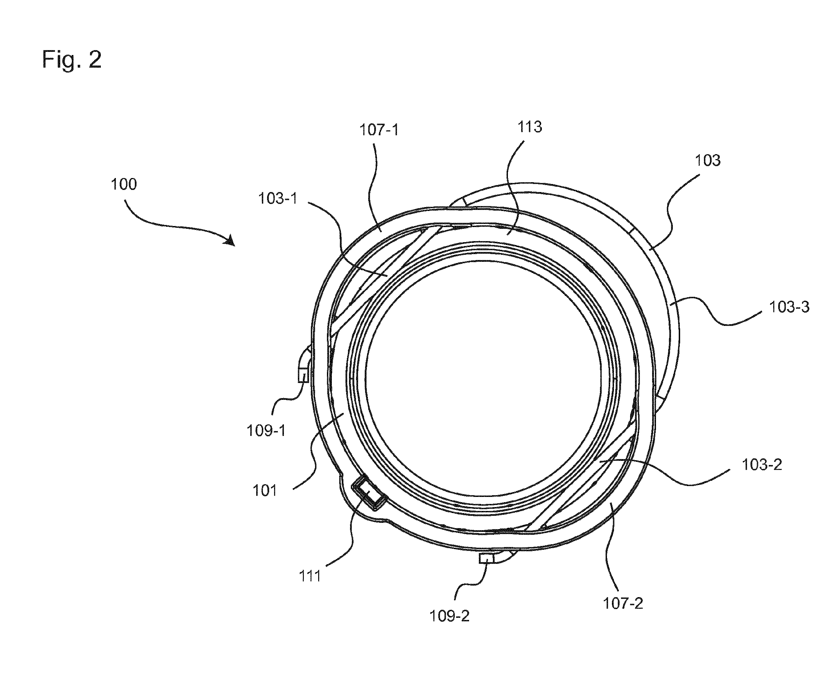

Fig. 2 zeigt eine Aufsicht des Stutzens 100 für das Schnellkupplungssystem in Verriegelungsposition. In der Verriegelungsposition sind die beiden geraden Bügelabschnitte 103-1 und 103-2 parallel zueinander angeordnet. Beim Einsetzen des Gegenstutzens in den Einsatzabschnitt 101 werden die Bügelabschnitte 103-1 und 103-2 radial nach außen gedrückt und federn dann in eine Nut des Gegenstutzens ein. Der Gegenstutzen kann dann auch bei einem Ziehen in axialer Richtung nicht aus dem Einsatzabschnitt 100 gelöst werden.

Der Verriegelungsbügel 103 befindet sich stets im geschlossenen und verriegelten Zustand. Zum Lösen des Schnellkupplungssystems wird der Verriegelungsbügel 103 in Richtung des Einsatzabschnittes 101 gedrückt. Nach dem Loslassen kehrt der Verriegelungsbügel 103 automatisch in den Ausgangszustand zurück, in dem die beiden Bügelabschnitte 103-1 und 103-2 parallel liegen. Die Endabschnitte 109-1 und 109-2 sind in Richtung der Wandung des Einsatzabschnittes 101 abgebogen.

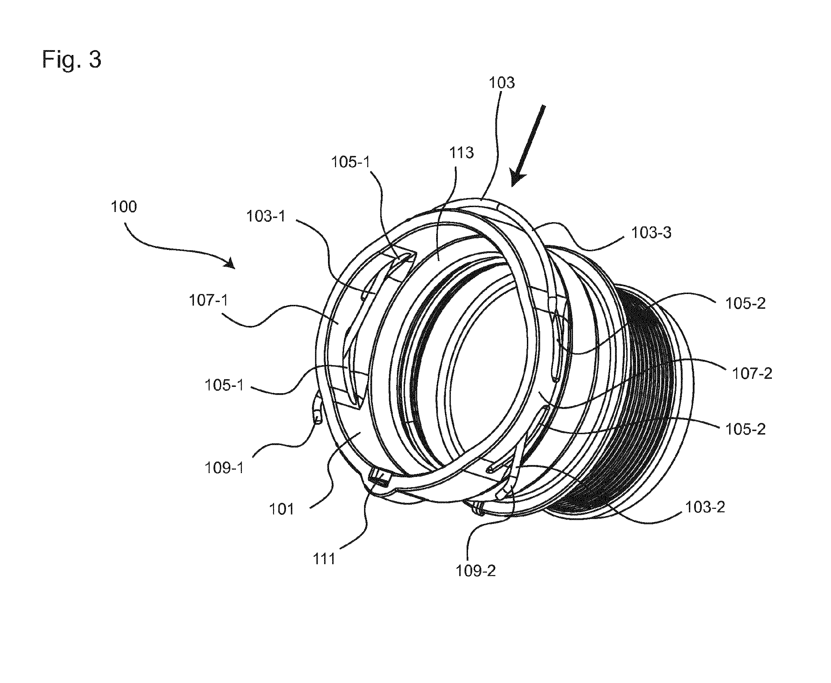

Fig. 3 zeigt eine perspektivische Ansicht des Stutzens 100 für das Schnellkupplungssystem mit einem Gegenstutzen in Entriegelungsposition. Die Entriegelungsposition wird dadurch erreicht, dass der Verriegelungsbügel 103 in Pfeilrichtung radial in Richtung des Stutzens 100 gedrückt wird. Die Innenseite des Verriegelungsbügels 103 kommt dabei in Kontakt mit dem Rand der gestreckten Öffnungen 105-1 und 105-2, so dass sich die Bügelabschnitte 103-1 und 103-2 nach außen aufspreizen und den Gegenstutzen freigeben.

Der dritte Bügelabschnitt 103-3 des Verriegelungsbügels 103 dient daher zum Spreizen des ersten und des zweiten federnden Bügelabschnitts 103-1, 103-2 beim Drücken des Verriegelungsbügels 103 in Richtung des Einsatzabschnittes 101. Beim Spreizen werden die beiden die Bügelabschnitte 103-1 und 103-2 des Verriegelungsbügels 103 in den gestreckten Öffnungen 105-1 und 105-2 radial nach Außen geführt.

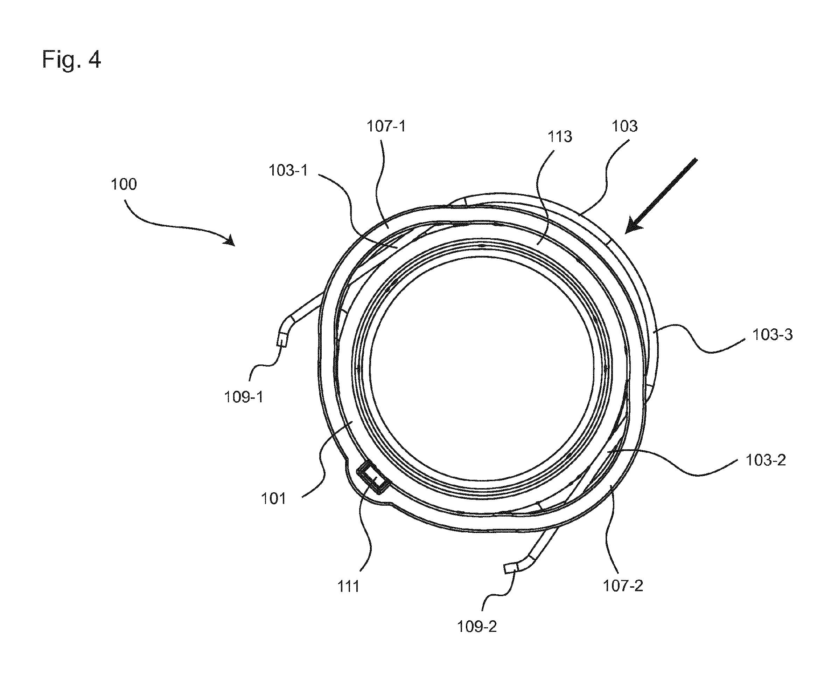

Fig. 4 zeigt eine Aufsicht des Stutzens 100 für das Schnellkupplungssystem in Entriegelungsposition beim Drücken des Verriegelungsbügels 103 in Pfeilrichtung. Die federnden Bügelabschnitte 103-1, 103-2 sind V-förmig gespreizt und geben den eingesetzten Gegenstutzen frei, indem diese aus der Nut des Gegenstutzens entfernt werden. Der Gegenstutzen kann in diesem Zustand axial aus dem Einsatzabschnitt 101 gezogen werden. Das Aufspritzen des Verriegelungsbügels 103 wird durch die Form der gestreckten Öffnungen 105-1 und 105-2 nach außen hin begrenzt.

Der Stutzen 100 wird beispielsweise durch ein Kunststoffformteil gebildet. Zum Erhöhen einer Dichtigkeit kann in einer Ausführungsform auf der umlaufenden Auflagefläche 113 für den Gegenstutzen ein Dichtring angeordnet sein. In einer anderen Ausführungsform dient die umlaufende Auflagefläche 113 zur Positionierung des Gegenstutzens an dem Stutzen 100. Auf der in Bezug auf den Gegenstutzen entgegengesetzten Seite der Auflagefläche 113 kann optional ein Dichtring angeordnet werden. Der Dichtring ist ausgebildet, um eine wirksame Dichtung zwischen dem Stutzen 100 und dem Gegenstutzen bereitzustellen. Der Stutzen ist ein Teil eines Schnellkupplungssystems, das einen Gegenstutzen mit einer umlaufenden Nut zum Eingreifen des ersten federnden Bügelabschnittes 103-1 und des zweiten federnden Bügelabschnittes 103-1.

Durch den Stutzen 100 wird ein kompaktes, bauraumoptimiertes Schnellkupplungssystem zur werkzeuglosen Montage und Demontage realisiert. Da der Verriegelungsbügel 103 zur Demontage nicht demontiert oder gezogen werden muss und sich stets im verriegelungsfähigen Zustand befindet, können Fehlbedienungen ausgeschlossen werden. Der Gegenstutzen kann durch Drücken des Verriegelungsbügels 103 in einfacher und schneller Weise gelöst werden.

Das lediglich drei Teile, nämlich Stutzen 100, Verriegelungsbügel 103 und Gegenstutzen, umfassende Schnellkupplungssystem zeichnet sich durch eine besonders kompakte Bauform aus und kann direkt in ein Kunststoffrohr integriert werden, beispielsweise mittels Spritzgießens. Durch den Stutzen 100 für die Schnellkupplung und das Schnellkupplungssystem werden somit gleichzeitig eine Montagesicherheit, eine Montage und Demontage ohne Werkzeug, eine geringe Anzahl von Einzelteilen und eine kompakte Bauform realisiert.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Stutzen
- 101: Einsatzabschnitt
- 103: Verriegelungsbügel
- 103-1: Bügelabschnitt
- 103-2: Bügelabschnitt
- 103-3: Bügelabschnitt
- 105-1: Öffnung
- 105-2: Öffnung
- 107-1: Erweiterungsabschnitt
- 107-2: Erweiterungsabschnitt
- 109: Endabschnitt
- 111: Aussparung
- 113: Auflagefläche

## Patentansprüche

1. Stutzen (100) für ein Schnellkupplungssystem mit einem Gegenstutzen, der einen Einsatzabschnitt (101) zum Einsetzen des Gegenstutzens und einen Verriegelungsbügel (103) umfasst, mit
einem ersten federnden Bügelabschnitt (103-1) zum Verriegeln des Gegenstutzens innerhalb des Einsatzabschnittes (101) an einer ersten Seite;
einem zweiten federnden Bügelabschnitt (103-2) zum Verriegeln des Gegenstutzens innerhalb des Einsatzabschnittes (101) an einer zweiten Seite; und
einem dritten Bügelabschnitt (103-3) zum Spreizen des ersten und des zweiten federnden Bügelabschnitts (103-1, 103-2) durch Drücken des Verriegelungsbügels (103) in Richtung des Einsatzabschnittes (101), um den Gegenstutzen zu entriegeln.

2. Stutzen (100) nach Anspruch 1, wobei der Verriegelungsbügel (103) u-förmig oder v-förmig ist.

3. Stutzen (100) nach einem der vorabgehenden Ansprüche, wobei der Verriegelungsbügel (103) aus einem gebogenen Draht mit rundem, ovalem oder rechteckigen Querschnitt gebildet ist.

4. Stutzen (100) nach einem der vorangehenden Ansprüche, wobei der Einsatzabschnitt (101) eine erste gestreckte Öffnung (105-1) zum seitlichen Führen des ersten federnden Bügelabschnitt (103-1) bei dem Spreizen und eine zweite gestreckte Öffnung (105-1) zum seitlichen Führen des zweiten federnden Bügelabschnitt (103-1) beim Spreizen umfasst

5. Stutzen (100) nach Anspruch 4, wobei die erste gestreckte Öffnung (105-1) in einem ersten Erweiterungsabschnitt (107-1) zum radialen Erweitern des Einsatzabschnittes (101) angeordnet ist und die zweite gestreckte Öffnung (105-2) in einem zweiten Erweiterungsabschnitt (107-2) zum radialen Erweitern des Einsatzabschnittes (101) angeordnet ist.

6. Stutzen (100) nach Anspruch 5, wobei der erste und der zweite Erweiterungsabschnitt (107-1, 107-2) im Querschnitt bogenförmig sind.

7. Stutzen (100) nach einem der vorangehenden Ansprüche, wobei die Endabschnitte (109-1, 109-2) des ersten und des zweiten federnden Bügelabschnittes (103-1, 103-3) abgewinkelt sind, um ein Herausrutschen des Verriegelungsbügels (103) aus dem Einsatzabschnittes (101) zu verhindern.

8. Stutzen (100) nach einem der vorangehenden Ansprüche, wobei der erste und der zweite Bügelabschnitt (103-1) kreissehnenförmig innerhalb des Einsatzabschnittes (101) verlaufen.

9. Stutzen (100) nach einem der vorangehenden Ansprüche, wobei der erste und der zweite Bügelabschnitt (103-1) parallel zueinander angeordnet sind.

10. Stutzen (100) nach einem der vorangehenden Ansprüche, wobei der Stutzen (101) eine umlaufende Auflagefläche (113) für ein Ende des Gegenstutzens umfasst

11. Stutzen (100) nach Anspruch 10, wobei die umlaufende Auflagefläche (113) einen Dichtring umfasst.

12. Stutzen (100) nach einem der vorangehenden Ansprüche, wobei der Einsatzabschnitt (101) eine Aussparung (111) in Einsatzrichtung zum Aufnehmen eines Vorsprungs des Gegenstutzens umfasst.

13. Stutzen (100) nach Anspruch 12, wobei die Aussparung (111) im Querschnitt rechteckig ist.

14. Stutzen (100) nach einem der vorangehenden Ansprüche, wobei ein Körper des Stutzens (100) durch ein Kunststoffformteil gebildet ist.

15. Schnellkupplungssystem mit einem Stutzen (100) nach einem der Ansprüche 1 bis 14, und einem Gegenstutzen mit einer umlaufenden Nut zum Eingreifen des ersten federnden Bügelabschnittes (103-1) und des zweiten federnden Bügelabschnittes (103-1).
